# EUROPEAN PATENT SPECIFICATION

(11) **EP 3 718 198 B1**
(45) Date of publication and mention of the grant of the patent: **07.05.2025**
(21) Application number: 18883798.3
(22) Date of filing: 05.10.2018
(51) Int. Cl.: H02K 7/02, H02K 5/04, H02K 7/09

(54) **APPARATUS AND METHOD FOR MAGNETICALLY UNLOADING A ROTOR BEARING**
VORRICHTUNG UND VERFAHREN ZUM MAGNETISCHEN ENTLADEN EINES ROTORLAGERS
APPAREIL ET PROCÉDÉ PERMETTANT DE DÉCHARGER MAGNÉTIQUEMENT UN PALIER DE ROTOR

(30) Priority: 28.11.2017 US 201715824204
(43) Date of publication of application: 07.10.2020
(73) Proprietor: Amber Kinetics, Inc., Union City, CA 94587 (US)
(72) Inventor: SANDERS, Seth, R., Union City, CA 94587 (US); TENNESSEN, Peter, Thomas, Union City, CA 94587 (US); BAKHOLDIN, Daniel, Union City, CA 94587 (US); GARTEN, Matthew, Brandon, Union City, CA 94587 (US); HOLLOWAY, Mark, J., Union City, CA 94587 (US); SENESKY, Matthew, K., Union City, CA 94587 (US)
(74) Representative: Viering, Jentschura & Partner mbB Patent- und Rechtsanwälte
(86) International application number: PCT/US2018/054697
(87) International publication number: WO 2019/108305

(56) References cited:
- US-A1- 2014 055 905
- US-A1- 2014 055 905
- US-A1- 2016 377 147
- US-A1- 2016 377 147
- US-B1- 6 630 761
- US-B1- 6 710 489
- US-B1- 6 794 777

## Description

### BACKGROUND OF THE INVENTION

### FIELD OF THE INVENTION

The present invention generally relates to rotors supported by mechanical bearings, and more particularly to a method and apparatus for unloading the weight of the rotor from its bearings.

### DISCUSSION OF THE BACKGROUND

Rotors, such as those used for storing rotational kinetic energy, have shafts along their axis of rotation that are typically supported by rolling bearings. Thus, for example, a vertically oriented rotor may have a lower rolling bearing and an upper rolling bearing. For such configurations, the lower bearing must usually be designed to support the weight of the rotor.

While the use of rolling bearings to support rotors is effective, the typical use of such bearings requires large bearings. Thus, for example rotors used for energy storage may have a weight in excess of 1,000 pounds. Roller bearings capable of supporting large weights are necessarily large and expensive. In addition, as is known in the field, ball bearing lifetime is limited by raceway fatigue, and scales inversely with the cubic power of the bearing load.

There exists a need for an apparatus and method that can reduce the axial load on the roller bearing supporting a rotor. The apparatus and method should be compatible with existing rotor designs and be easy to implement. The apparatus and method should also provide for longer bearing lifetimes.

Exemplary flywheel devices are disclosed in US 2016/377147 A1 and in US 2014/055905 A1.

### BRIEF SUMMARY OF THE INVENTION

According to the present invention, a flywheel apparatus defined in claim 1 is provided. Exemplary embodiments according to the present invention are defined in the dependent claims.

### BRIEF DESCRIPTION OF THE SEVERAL VIEWS OF THE DRAWING

FIG. 1 is a schematic cross-sectional view of a first embodiment flywheel apparatus of the present invention;
FIGS. 2A and 2B are schematic cross-sectional views of an upper bearing assembly not encompassed by the wording of the claims, where FIG. 2A shows the rotor in an extreme lower position, and FIG. 2B shows the rotor in an extreme upper position;
FIG. 3 is a schematic cross-sectional view of a first embodiment lower bearing assembly;
FIG. 4 is a graph showing the lifting force as a function of electromagnet current for two values of the gap, according to one embodiment;
FIG. 5 is a graph showing the lifting force as the current is varied during operation of one embodiment of the flywheel apparatus;
FIG. 6 is a schematic cross-sectional view of another upper bearing assembly not encompassed by the wording of the claims;
FIG. 7 is a schematic cross-sectional view of a second embodiment lower bearing assembly;
FIG. 8 is a control system diagram illustrating a control algorithm;
FIG. 9 is a schematic cross-sectional view of a second embodiment flywheel apparatus of the present invention;
FIG. 10 is a graph showing the current as a function of the flux linkage for two values of the gap, according to one embodiment;
FIG. 11 is a control system diagram illustrating another control algorithm;
FIG. 12 is a schematic cross-sectional view of a flywheel apparatus of the present invention having a second embodiment magnet;
FIG. 13 is a schematic cross-sectional view of a flywheel apparatus of the present invention having a third embodiment magnet;
FIG. 14 is a schematic cross-sectional view of an embodiment of an upper bearing assembly;
FIG. 15 is a schematic cross-sectional view of a third embodiment of a lower bearing assembly; and
FIG. 16 is a control system diagram illustrating an embodiment of a control algorithm of the present invention.

Reference symbols and labels are used in the Figures to indicate certain components, aspects or features shown therein, with reference symbols and labels common to more than one Figure indicating like components, aspects or features shown therein.

### DETAILED DESCRIPTION OF THE INVENTION

The following description describes, in detail, specific embodiments of an apparatus and method that provides for magnetic unloading of conventional roller bearings that support a rotor. Unloading of rotor bearings reduces the running friction and also increases the bearing lifetime. Thus, for the example of the use of a rotor in a flywheel energy storage system, the inventive unloading can reduce the running friction to negligible levels and extend bearing lifetime by orders of magnitude. In addition, the inventive structure and method provides magnetic support for a rotor at its minimal possible setting such that the power required by a magnetic lifting winding is minimal.

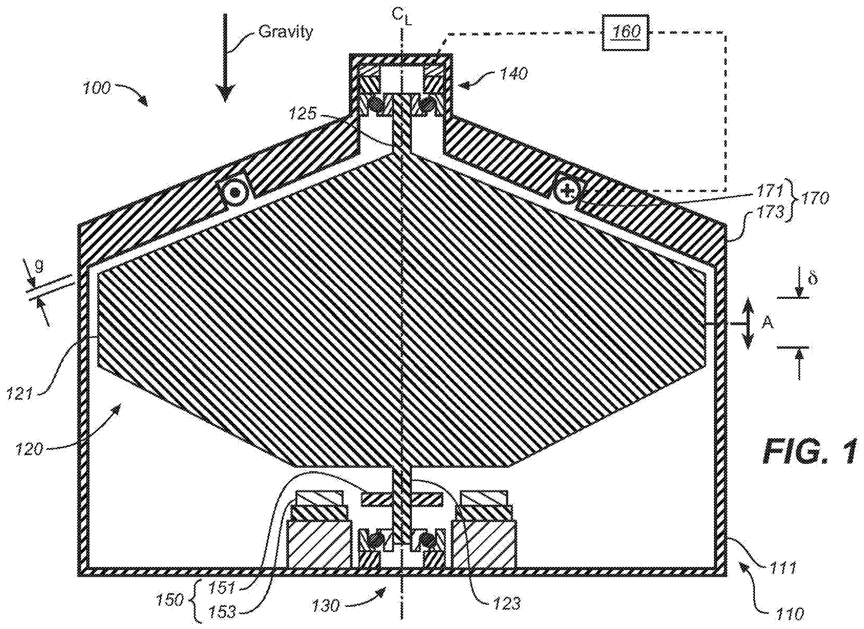

Figure 1 is a schematic cross-sectional view of a first embodiment flywheel apparatus 100 which includes a housing **110,** a rotor **120** having a rotational axis **CL,** and bearings for supporting the rotor and permitting rotation, and which may include a lower bearing assembly **130** and an upper bearing assembly **140.** Flywheel apparatus **100** also includes a magnet **170;** power components **150** for adding or removing power from rotor **120**; and a magnetic offloading control system **160.** Flywheel apparatus **100** and bearing assemblies **130** and **140** are generally symmetric about a centerline **CL.** As discussed subsequently, bearing assemblies **130** and **140** support rotor **120** while permitting some axial motion of the rotor, indicated by arrow **A,** and where the total range of axial motion is indicated as δ.

As discussed subsequently, magnet **170** includes an electro-magnet, which is also referred to herein without limitation, as an "offloader" or "offloader electromagnet," which may be operated to provide a force on rotor **120** that is counter to the gravitational force. When the electro-magnet of magnet **170** is actuated, such as by a current applied by control system **160,** the rotor may move upwards by, for example, the indicated distance δ. In one embodiment, a minimal distance, δ, may be for example, from 0.25 mm (0.01 inches) to 1.0 mm (0.04 inches), to allow for anticipated differential expansion.

A portion of the support of rotor **120** is thus transferred to magnet **170,** and thus reduces the amount of downwards force on bearing assembly **130.** The reduced bearing loading is beneficial in that a smaller, lighter bearing may be used and/or bearing life may be increased over a bearing that must support the entire rotor weight.

Housing **110** includes a housing body **111** which surrounds rotor **120** and may, for example, be evacuated of air to reduce frictional losses from the spinning rotor. Housing **110** also includes components of magnet **170,** including but not limited to an upper housing member **173** formed of or including a magnetic material and lifting winding **171.** The magnetic material of upper housing member **173** may be, for example and without limitation, steel. In alternative embodiments, magnet **170** is located above rotor **120** and is separate from housing **110.** Magnet **170** is thus arranged to provide a lifting force on rotor **120.**

As discussed subsequently, various embodiments of housing **110** and/or magnet **170** may include, for example and without limitation, sensing elements to determine the state of the operation of magnet **170** and/or rotor **120.**

Rotor **120** has a rotor body **121** that is formed from or includes a magnetic material, a lower shaft **123,** and an upper shaft **125.** In one embodiment, rotor **120,** for example and without limitation, is formed from a magnetic material, such as steel and has a weight W of from 45 kg (100 lbs.) to 27,000 kg (60,000 lbs.).

Power components **150** include, but are not limited to a motor-generator comprising a rotor **151** attached to lower shaft **123** and a stator **153** attached to housing **111.** Power components **150** are well known in the field and are used to convert electrical energy to rotational energy in rotor **120.**

In general, bearing assemblies **130, 140** provide rotational support for rotor **120** within housing **110.** Assemblies **130** and **140** illustrated in FIG. 1 are generic, and more specifically, as discussed subsequently, lower bearing assembly **130** includes a roller bearing that connects lower shaft **123** and housing **110,** and upper bearing assembly **140** includes a roller bearing that connects upper shaft **125** and the housing. In addition, various embodiments of bearing assemblies **130** and/or **140** may include, for example and without limitation, springs that permit axial motion and forces on a bearing, a stop to limit the axial motion of a bearing, and/or a sensor for measuring an axial force or displacement on a bearing. The axial growth (or attenuation) of the rotor and small axial displacement of rotor **120** may be provided or mitigated by combinations of springs, stops, and magnets, to provide a range of δ of up to about 1 millimeter during the operation of flywheel assembly **100.**

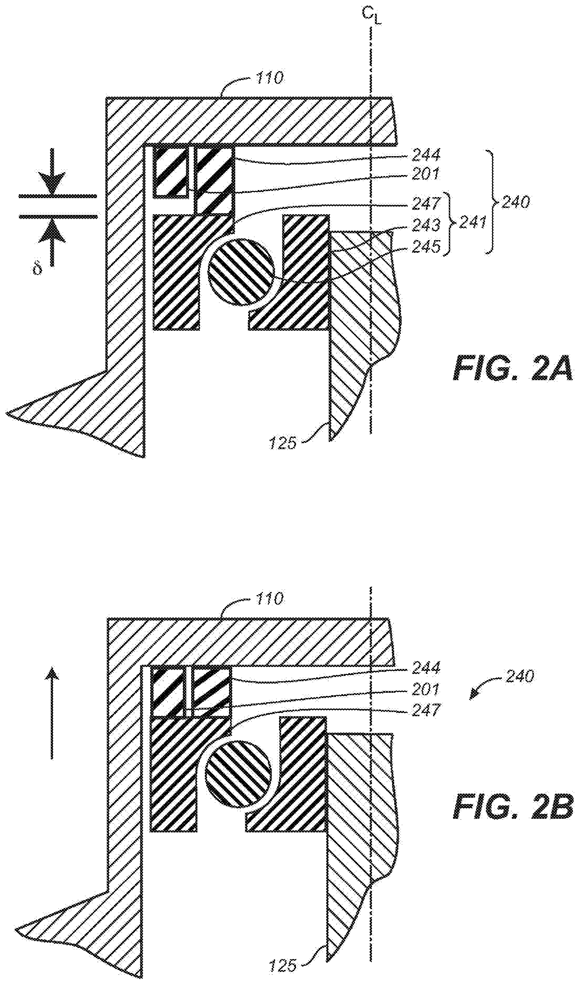

In general, the minimum requirement for the bearing assemblies **130, 140** is that they include at least one set of bearings and allow for some axial motion of rotor **120.** Figures 2A and 2B are schematic cross-sectional views of an upper bearing assembly **240** which is not encompassed by the wording of the claims but is considered useful for understanding the invention. FIG. 2A shows the rotor **120** in an extreme lower position and FIG. 2B shows the rotor in an extreme upper position. Upper bearing assembly **240** is generally similar to bearing assemblies **130** and **140,** except as explicitly discussed below.

As shown in FIG. 2A, upper bearing assembly **240** supports upper shaft **125** in housing **110.** More specifically, upper bearing assembly **240** includes bearings **241** which include a bearing inner portion **243,** ball bearings **245,** and a bearing outer portion **247.** The inner portion of bearing **241** is connected to rotor **120** with, for example, bearing inner portion **243** being press-fit to upper shaft **125** and bearing outer portions **247** connected to housing **110.** Upper bearing assembly **240** also includes an upper axial spring **244** that connects housing **110** and bearing outer portion **241,** and a rigid piece indicated as a stop **201** that is connected to housing **110** and which limits the spring motion. Spring **244** may be, for example and without limitation, a wave or Bellville washer, and may be configured to provide a downwards force on rotor **120.**

In the extreme lower rotor position of FIG. 2A, there is a gap of dimension δ between the bearing outer portion **247** and the stop residing in the housing **110.** In the extreme upper rotor position of FIG. 2B, bearings **241** are forced upwards until bearing outer portion **241** contacts stop **201.** Upper bearing assembly **240** thus allows rotor **120** to rotate and provides axial displacement limited by the size of stop **201.**

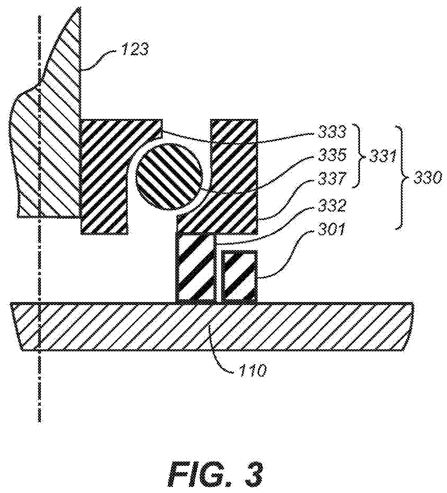

Figure 3 is a schematic cross-sectional view of a first embodiment lower bearing assembly **330.** Lower bearing assembly **330** is generally similar to bearing assemblies **130, 140,** and **240,** except as explicitly discussed below.

As shown in FIG. 3, lower bearing assembly **330** supports lower shaft **123** in housing **110.** More specifically, lower bearing assembly **330** includes bearings **341** which include a bearing inner portion **333,** ball bearings **335,** and a bearing outer portion **337.** The inner portion of bearing **331** is connected to rotor **120** with, for example, inner bearing portion **333** being press-fit to lower shaft **123** and bearing outer portion **337** connected to housing **110.** Lower bearing assembly **330** also includes a lower axial spring **332** that connects housing **110** and bearing outer portion **331,** and an optional rigid stop **301** that is connected to housing **110** and which limits the spring motion. Spring **332** may be, for example and without limitation, a wave or Bellville washer, and may be configured to provide an upwards force on rotor **120.** Lower bearings **331** may be similar to upper bearings **341,** or may be different in construction or load bearing capability.

The lifting force on rotor **120** by magnet **170** is determined by a gap **g,** which is the distance between the poles of the magnet and the rotor. It is apparent from FIG. 1 that gap **g** varies with the axial displacement δ, depending on rotor and magnet geometry. Thus, when the rotor moves to an extreme upwards position, **g** is a minimum, and when the rotor moves downwards by the distance δ, **g** is at a maximum distance. In addition, as the gap g changes, the forces on rotor **120** from movement of springs, such as from lower axial spring **332** and upper axial spring **244,** may also change, depending on the spring design.

The outer portions of bearings **241** and **331** are mounted with a slip fit, with radial clearance of 2.5 µm (0.0001 inches) to 25 µm (0.001 inches). Axial play δ is only provided to allow for necessary differential length expansion of rotor relative to housing due, for example, to mismatched thermal conditions, or to Poisson effect induced rotor axial length variation due to centripetal loading.

This is nominally only needed at one end, the bottom, when magnet **170** is actuated. In one embodiment, slip fits are provided for both bearings **241** and **331** to be able to set the bearing forces with axial springs **244** and **332** when magnet **170** is either active (with bottom spring **331** and slip fit) or inactive (with top spring and slip fit).

Control system **160** may be used to provide a current **I** to lifting winding **171.** Specifically, when current **I** is applied to lifting winding **171,** the resulting magnetic field produces an attraction to magnetic materials in rotor body **121** that is counter to weight of the rotor body. Thus, for example, without any current in lifting windings **171** the combined bearing forces on bearing assemblies **130** and **140** is the weight of the rotor. With the application of a current to lifting windings **171,** the combined bearing forces on bearing assemblies **130** and **140** is the rotor weight less the attractive force of rotor **120** to lifting windings **171.**

The following simplified analysis provides some understanding of the forces involved in flywheel assembly **100** and in particular on bearing assemblies **130** and **140.**

The forces on rotor **120** include the combination of the downward weight **W** of the rotor, a downward force f_{UB} exerted by upper bearing **241,** an upwards force f_{LB} exerted by lower bearing spring **332** and upwards lifting force induced by magnet **170,** which may be written as **F.**

The forces on bearings **241** and **331** are thus a combination of **W** and **F,** and the forces imposed by axial springs **244** and **332** and any stops that are encountered by the movement of the bearings, such as stop **201** and/or stop **301.** In general axial springs **244** and **332** may both be provided with a small amount of axial preloading, such as a minimal fraction (e.g. 0.001 to 0.10) of the rotor weight **W.** It is particularly important that rotor **120** does not contact any stationary parts. In addition, as discussed below, as rotor **120** approaches magnet **170,** the attractive force increases under fixed magnet current, and some method is desirable to fix a minimum magnet-rotor spacing.

Since the lower bearing force is reduced by an increase in lifting force **F,** it is seen that the application of a lifting force may greatly decrease the forces on the bearings of lower bearing assembly **130.** In certain embodiments, as discussed below, the force **F** is adjusted to balance, or nearly balance, the weight **W,** and the upper and lower bearing forces become nearly the same, and may have a value equal to the small amount of preloading noted above.

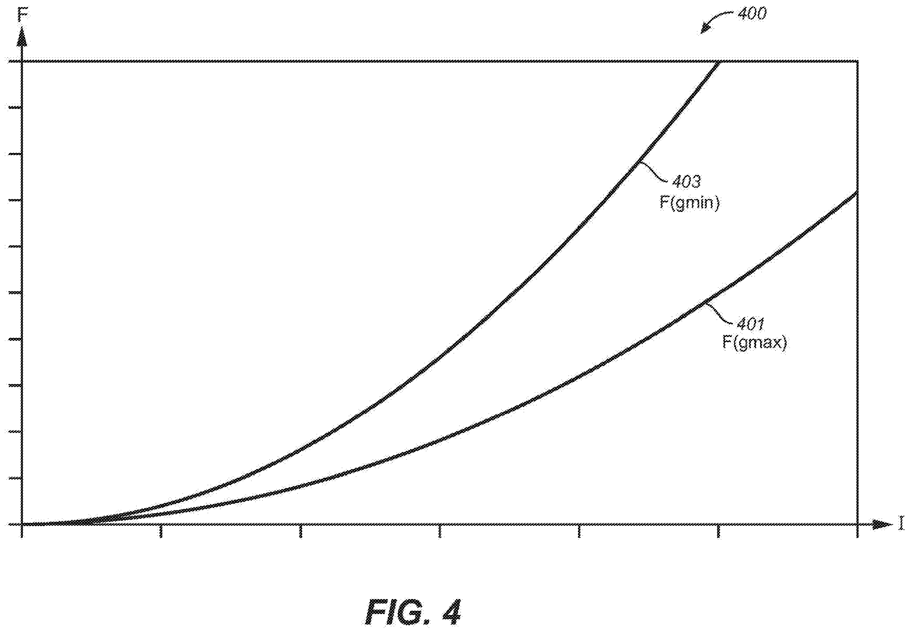

A simplified analysis, based on use of high permeability linear magnetic materials, shows that the value **of F** increases with the square of the current **I** and inversely with the square of the gap **g.** Thus, for example and without limitation, an idealized model of electromagnet components of magnet **170** of FIG. 1 is shown in Figure 4 as a graph **400** showing the lifting force, **F,** as a function of electromagnet current, **I,** for two values of the gap **g.** A first curve **401** is computed for a maximum value of **g (g = gₘₐₓ)**, that is, where rotor **120** is in an extreme lower position, as shown for example in FIG. 2A, and a second curve **403** is computed for a minimum value of **g (g = gₘᵢₙ),** that is where the rotor is in the extreme upper position, as shown for example in FIG. 2B. The lifting force **F** of magnet **170** on rotor **120** is approximated by F = k(g) * I², where the direction of **F** is upwards in FIG. 1, **I** is the current provided to lifting winding **171,** and k(g) is a constant that depends on the gap g. More specifically, a decrease in g will increase k(g), that is, the attraction becomes greater as rotor **120** approaches electromagnet **170.** With idealized magnetic material of infinite permeability, k(g) would exhibit an inverse-square dependence.

With no current (**I** = 0), rotor **120** is at an extreme lower position, and the curve **401** provides the value of the lifting force **F** as a function of **I.** When the current is sufficient to lift the rotor to an extreme upper position, the value of the lifting force increases to that provided by curve **403.** Rotor **120** thus has two stable mechanical positions depending on the current.

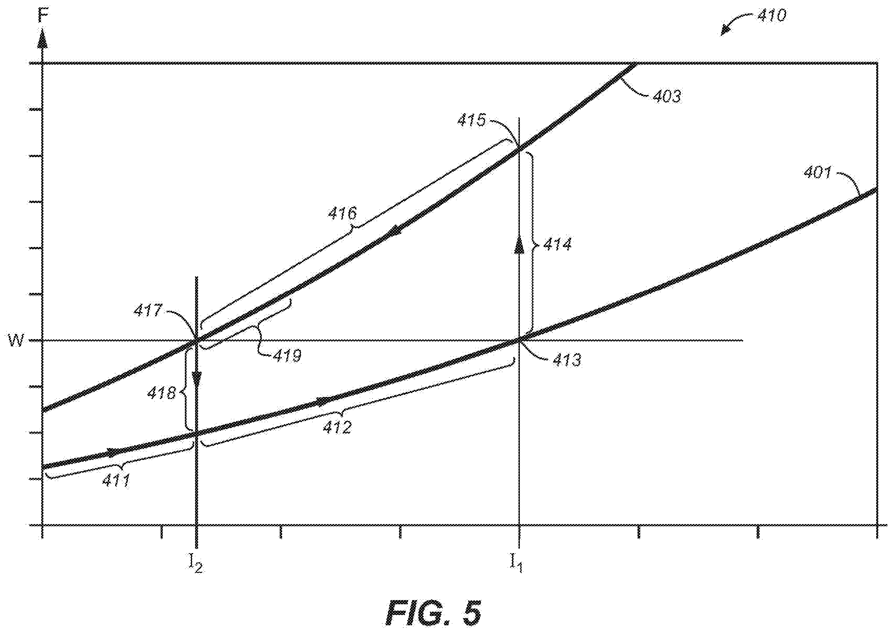

One way of analyzing the dynamics of flywheel apparatus **100** is illustrated further in Figure 5 as a graph **410** showing the lifting force **F** as the current **I** is varied during operation of the flywheel apparatus **100.** Starting from rest, the gap is a maximum **(g = gₘₐₓ)** and the application of current to magnet **170** increases lifting force **F** along curve **401,** shown as curve portions **411** and **412.** At some first, or upper critical current, indicated as **I₁,** lifting force **F** overcomes the weight **W** and other forces on rotor **120,** such as spring preloading, as indicated by a point **413** of curve **401.** At this point the axial position of rotor **120** is unstable and any slight increase in current or slight upwards axial motion of the rotor will cause the rotor to rise, decreasing **g** to a value of **gₘᵢₙ,** as indicated by curve portion **414** which terminates at a point **415** on curve **403.** Note that at this smaller gap **g,** the lifting force **F** has increased to a value much greater that the weight **W,** forcing the rotor to the extreme upper position of FIG. 2A. The instability at the critical point is due to the large negative stiffness of the attractive magnet assembly.

With the rotor operating along curve **403,** the current **I** may be decreased, as shown by curve portion **416.** At some second, lower critical current, indicated by **I₂,** the lifting force again balances the forces on rotor **120,** at a point **417** on curve **403,** and the position of the rotor falls to a gap of **gₘᵢₙ** and the operation of the rotor is along curve **401.** The lifting force in now insufficient to levitate the rotor, and an increase in current moves back along portion **412** to point **413.** The current force diagram thus demonstrates hysteresis with changes in current.

Certain embodiments operate the inventive flywheel assembly to reduce the load on the bearings, and specifically to a bearing in lower bearing assembly **130.** The reduced operating load results in a reduced bearing size, and cost and increased lifetime.

In general, it is thus seen that the magnetic lifting force is thus accompanied by a substantial negative stiffness. When this lifting force roughly matches the rotor weight, and thus far exceeding the passive mechanical spring preloads, the accompanying negative stiffness also far exceeds the passive positive stiffness(es) of the preloading springs. As a consequence, the rotor will find a stable equilibrium in one of the two extreme axial positions. These positions correspond to either: 1) the lower bearing outer raceway residing in its extreme axial position in its seat (set by mechanical stop), or 2) the upper bearing outer raceway residing in its respective extreme axial position. This strategy of operation at an extreme axial position is desired because of the relatively high axial stiffness that results. Remaining axial compliance is due to the bearing axial stiffness, itself.

It is expected that that operation where the magnetic lifting force is large enough to guarantee that the upper bearing outer raceway is positioned against its stop is the preferred position, and design. This requires additional lifting force beyond that required to simply unload the bearings.

Positioning the rotor at its upper axial extreme position is strategic for two reasons: (i) the magnetic gap of the lifting structure is held at its minimum. This minimum (e.g. 1-3 mm) is set by manufacturing tolerances. The minimum gap results in minimum lifting current and power dissipation to achieve the specified lifting force; and (ii) the magnetic gap remains invariant over operating conditions as differential expansions between rotor and housing occur. These differential expansions are taken up at the bottom bearing seat.

Thus, lifting power dissipation for equilibrium is held to its practical minimum, the magnet current to affect this lifting force is nearly invariant during operation.

In certain embodiments, it is preferable to operate flywheel apparatus **100** such that lifting force **F** closely and stably balances the weight **W.** Curve portion **419** illustrates a stable operating range of flywheel apparatus **100** with a gap value of **gₘᵢₙ** such that the rotor **120** is closer to magnet **170,** and the lifting force closely matches the weight of the rotor. Specifically, at such conditions, the rotor weight is lifted, with magnet **170** supporting the weight of the rotor, and the axial force on the bearing of bearing assembly **130** is on the order of the amount of preloading of any spring in the bearing assembly **130,** which can be a small fraction of the weight of the rotors, such as in the range of 1% of bearing rated dynamic load capacity.

With rotor **120** thus lifted, the load on lower bearing **331** is set precisely by axial spring **332,** and the load on upper bearing **241** is set by difference of magnetic force and rotor weight. Under some conditions, the difference between the magnetic force and rotor weight will equal the spring force in upper assembly. Under other conditions, specifically where the negative magnet stiffness exceeds the positive spring stiffness, upper bearing **241** will contact stop **210,** and the load on upper bearing **241** will be in excess of the preloading of spring **244.** The reduced operating load on the bearing results in a reduced bearing size and cost and increased lifetime.

In one embodiment, control system **160** cycles the current between **I₁** and **I₂,** and then provides a current slightly higher current than **I2,** on curve portion **419.** In another embodiment, the control system **160** provides open loop control by determining currents **I₁** and **I₂** before operation of flywheel system **100** and storing the values in a look-up table, and the flywheel is then operated by increasing the current to **I₁,** and then decreasing the current to a value slightly above the value **I₂** to operate on curve portion **419.**

In general, it may be difficult to set current (or to specify magnet strength) in an offloading magnet device with a simple open-loop set point. This difficulty arises from the lifting magnet parametric uncertainties. Uncertainties arise from geometric variation in the magnetic gap and area, occurring in both manufacture (tolerance) and operation. Parametric variations in operation occur with magnetic gap variation in response to: (i) differential thermal expansion between rotor and housing, and (ii) to applied magnetic lifting force. Specifically, magnetic lifting force may directly affect the equilibrium position of the rotor against a passive axial spring loading element.

The following discussion describes two embodiments for more directly controlling the lifting of rotor **120** by using sensors and feedback control. The first utilizes mechanical sensors or measurements to determine the position of or forces on rotor .**120.** The second utilizes electrical (non-mechanical) sensors or measurements to determine the magnetic flux and thus determine the operating condition of the flywheel apparatus **100.**

### MECHANICAL SENSING AND METHOD OF OPERATION

Certain embodiments include sensor and/or measurements of rotor displacement. In certain embodiments, control system **160** may receive input from sensors of flywheel assembly **100** which may be used to regulate the current **I** through feedback control to operate rotor **120** at an extreme upper position with a current that is as close to the minimum current **I₂** as is practically possible.

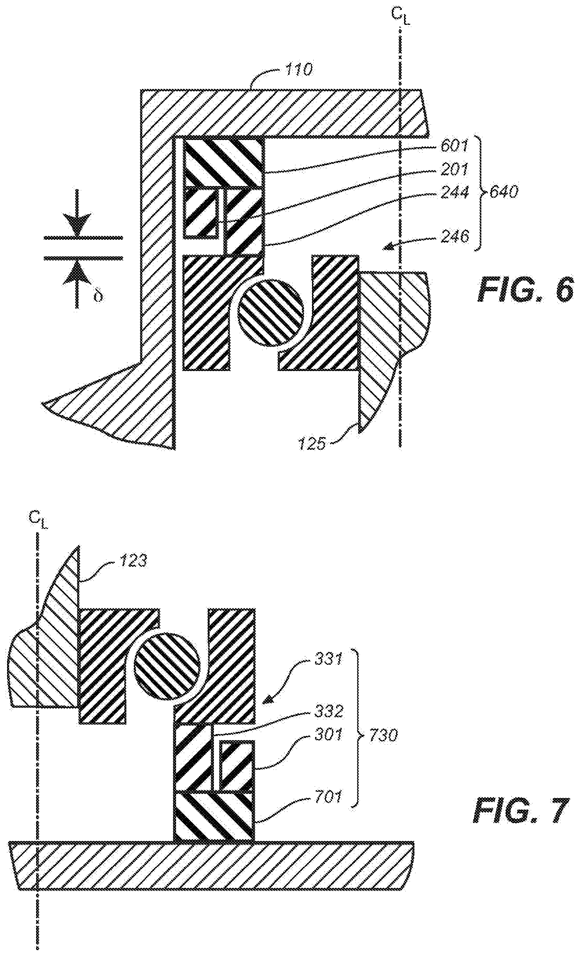

As an example of using mechanical sensing to control flywheel assembly **100,** one or more force sensors may be provided to flywheel assembly to measure forces and provide an output to control system **160.** Thus, for example, Figure 6 is a schematic cross-sectional view of another upper bearing assembly **640** which is not encompassed by the wording of the claims but is considered useful for understanding the invention. Figure 7 is a schematic cross-sectional view of a second embodiment lower bearing assembly **730.** Bearing assemblies **640** and **730** are generally similar to the other bearing assemblies **130, 140, 240, 330,** described herein, except as explicitly discussed subsequently.

As shown in FIG. 6, upper bearing assembly **640** includes the components of upper bearing assembly **240** and a force sensor, referred to herein as strain gauge **601.** Strain gauge **601** is attached to housing **110,** and stop **201** and axial spring **244** are both attached to the strain gauge. The operation of upper bearing assembly **640** is thus generally similar to that of bearing assembly **240,** and uses strain gauge **601** to measure the forces transmitted from rotor **120** to the upper bearing assembly and provide the measurement to control system **160.**

As shown in FIG. 7, lower bearing assembly **730** includes the components of lower bearing assembly **330** and a force sensor, referred to herein as strain gauge **701.** Strain gauge **701** is attached to housing **110,** and stop **301** and axial spring **332** are both attached to the strain gauge. The operation of lower bearing assembly **640** is thus generally similar to that of bearing assembly **330,** and uses strain gauge **701** to measure the forces transmitted from rotor **120** to the lower bearing assembly and provide the measurement to control system **160.**

In one embodiment, control system **160** accepts and uses the signal of upper strain gauge 601 as an indication of the axial load on upper bearing **241.** Strain gauge **601** may then be used in a low bandwidth control loop, via conventional signal feedback or for calibration, to accurately set a preload on upper bearing **201.** The axial preload of lower bearing **331** is set by lower axial spring **332.**

In another embodiment, force **F** is used to hold rotor **120** against stop **201,** and only one strain gauge measurement is needed in the upper bearing, as for example by strain gauge 601, while no strain gauge is provide on lower bearing assembly **130.** The axial load on lower bearing **331** is set by the preload spring in the bottom bearing mount.

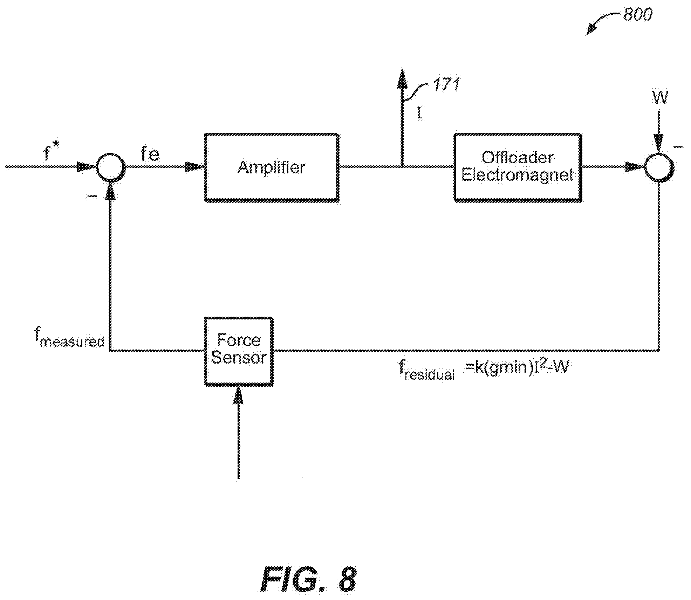

Figure 8 is a control system diagram illustrating a control algorithm **800** that may be implemented as an analog or digital control system **160.** In general, control algorithm **800** accepts a measure of the force on upper bearing **241** as sensed, for example, a force sensor which may be, for example, strain gauge **601,** and provides a current **I** to lifting winding **171** to operate flywheel apparatus on the curve portion **419** of FIG. 5.

Algorithm **800** has a stored reference value **f*** that is indicative of the desired axial force on upper bearing **231** and calculates a residual force, which may be written as **f_{residual}** = k(gₘᵢₙ) * I² - **W.** The residual force is sensed by strain gauge **601,** which produces an output analog signal **f_{measured}.** Algorithm **800** subtracts **f_{measured}** from **f*,** to produce error signal **fₑ,** which is then amplified to produce the desired amount of current **I** to lifting winding **171.**

### NON-MECHANICAL SENSING AND METHOD OF OPERATION

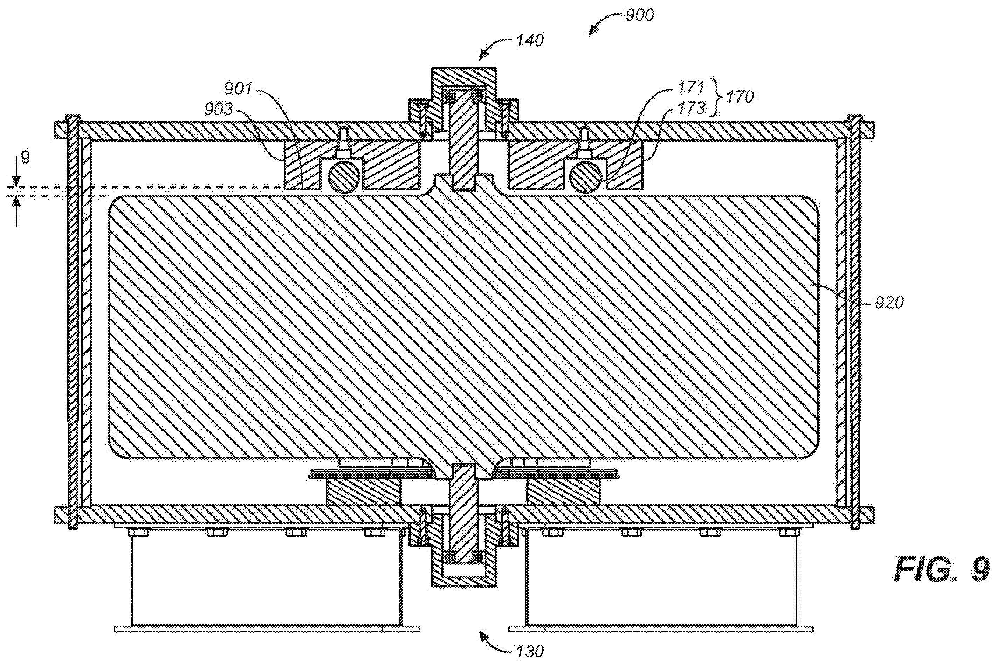

The following discussion provides alternative embodiments for control of flywheel assembly **100** based on measurements related to the magnetic flux the produces force **F.** Figure 9 is a schematic cross-sectional view of a second embodiment flywheel apparatus **900.** Flywheel apparatus **900** is generally similar to flywheel apparatus **100,** except as explicitly discussed subsequently.

Flywheel apparatus include a rotor **920** that is more cylindrically shaped than rotor **120,** but is otherwise generally similar. Rotor **920** may be used in any of the previous embodiments, which may be for example and without limitation the embodiments of any one of FIGS. 1, 2, 3, 6 or 7. Alternatively, the non-mechanical sensing and method of operation of this section may be incorporated into rotor **120,** or rotors of other, different geometries.

Flywheel apparatus is also provided with one or more gap magnetic field sensing elements. FIG. 9 shows the placement of a first Hall sensor **901** which is located directly in the gap between rotor **920** and electromagnet **170** and measures the field within the gap, and a second Hall sensor **903** which is located on an outer edge of the electromagnet lifting pole and which senses the fringing field, which is directly proportional to the direct gap field.

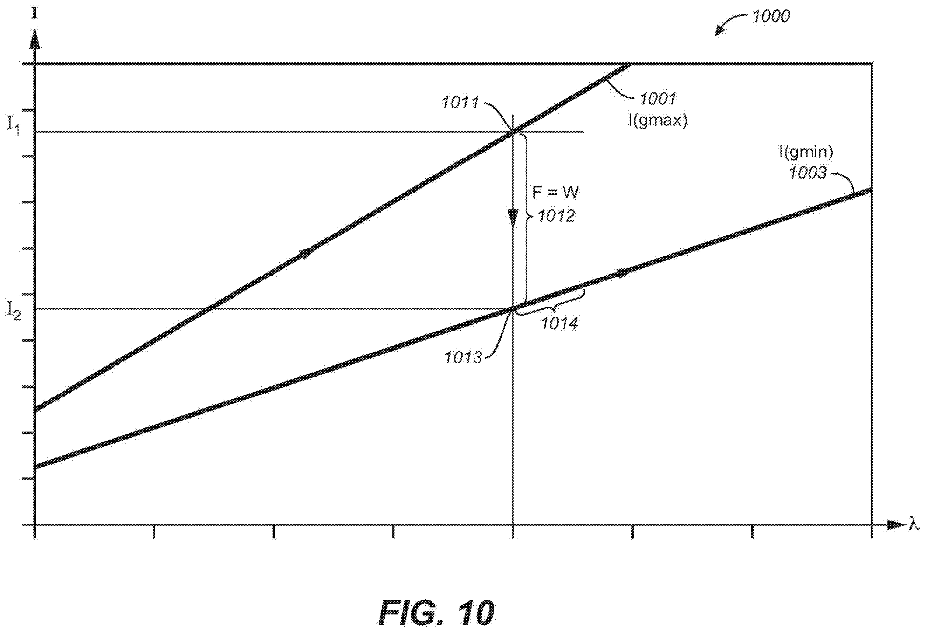

The magnetic lifting force **F** may be described as F = k_{B} λ², where λ is the winding flux linkage, and k_{B} is essentially independent of magnetic gap g. The winding flux linkage is defined as the integral of the magnetic flux density normally crossing the gap, multiplied by the number of winding terms. Use of measured gap flux, or alternatively a signal that is physically proportional to the gap flux, provides a measurement signal for precise and accurate control of the magnetic unloading force. Figure 10 is a graph **1000** showing the current **I** as a function of flux linkage λ for the electromagnet for two values of the gap - curve **1001** shows the current for the maximum gap gₘₐₓ, and curve **1003** shows the current for the minimum gap **gₘᵢₙ.**

As flux is increased from zero, the current I increases proportionally according to the reciprocal winding inductance with largest gap dimension **gₘₐₓ** along curve **1001.** This is the smallest value of winding inductance. As flux increases, the magnetic force rises until it balances the rotor weight. At this critical value of **I = I₁** which is indicated as point **1011,** and which is discussed above with reference to FIG. 5, the rotor rises, as indicated by a curve portion **1014,** resulting in new magnetic gap gₘᵢₙ, and a corresponding maximum winding inductance. The winding current **I** reduces from **I = I₁** to **I = I₂** since the flux cannot change instantaneously. Subsequent increases in flux follow curve **1003,** corresponding to maximum inductance, and minimal winding current. This region, and especially a portion **1014** near point **1013,** defines the preferred efficient region of operation. Reference values of flux and of winding current can be derived from observation of this transition.

The electrical parameter that delineates the two curves in FIGS. 4 and 10 is the offloader winding inductance. Thus the transition values of current **I₁** and **I₂,** and of flux **λ,** are reflected in the instantaneous winding inductance value. The instantaneous winding inductance value can be determined by computing the static ratio of flux lambda to winding current. Alternatively, the instantaneous winding inductance value can be determined by injecting a small amplitude ripple signal into the winding, and resolving the ratio of the ripple flux to the ripple current. The ratio of ripple flux to ripple current is also defined by the winding inductance.

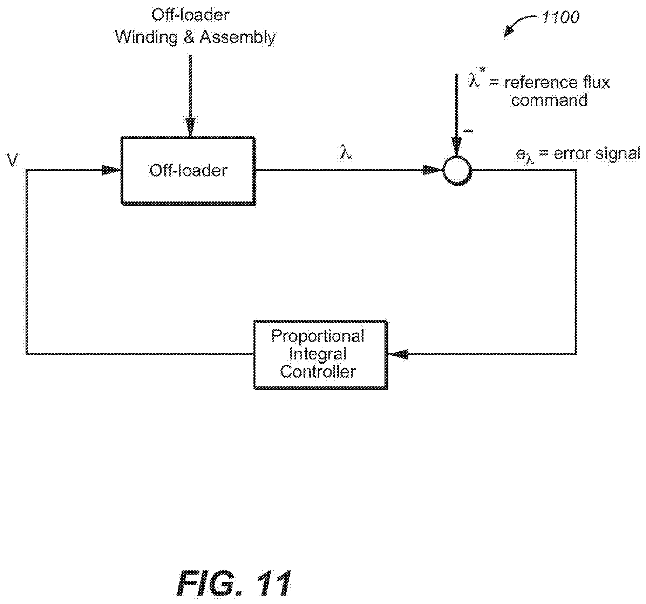

The derived reference value of current **I₂** may be used directly by control system **160** to drive current **I,** providing the desired unloading force. Or, an alternative controller based on magnetic flux may be used to accurately control force as illustrated in control system diagram of Figure 11, which shows a second embodiment of a control algorithm **1100.**

Control algorithm **1100** illustrates the use of winding voltage **171** as input to control system**160,** adjusting the voltage up when flux is below the reference value, and vice versa. This control can be conveniently implemented with either an analog or digital proportional-integral (P-I) controller. The current **I** may be measured for use in over-current protection circuitry, and may also be used as an auxiliary variable for use in the controller. However, direct control of current as an input, or as an output is not needed, since magnetic flux is used as the principle physical control variable.

### ALTERNATIVE MAGNET EMBODIMENTS

In alternative embodiments, any of the flywheel apparatus described above may have a magnet **170** that is a hybrid magnet including both an electromagnet and a permanent magnet.

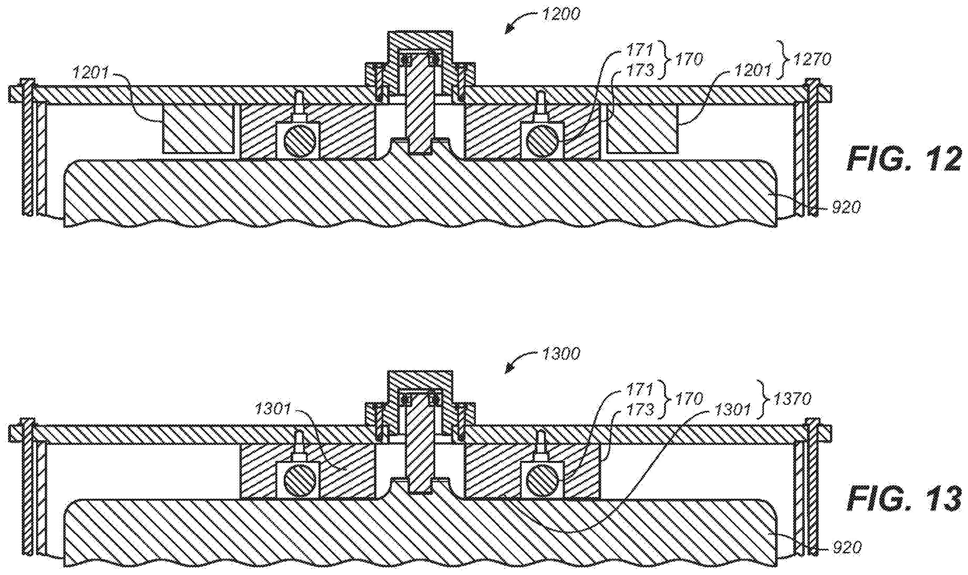

Figure 12 is a schematic cross-sectional view of a flywheel apparatus **1200** of the present invention having a second embodiment magnet **1270.** Flywheel apparatus **1200** is generally similar to any of the flywheel apparatus described above. Magnet **1270** includes magnet **170,** which is an electromagnet, and a permanent magnet **1201.** In this embodiment, magnet **1201** is an axially magnetized ring magnet, and may be one magnet, or could be several smaller arc magnets. Magnets **170** and **1201** are arranged to have shared flux paths.

In flywheel apparatus **1200,** rotor **920** is lifted by the combination of magnets **170** and **1201.** This combination reduces the amount of lifting current required by magnet **170,** and thus the windings of the electromagnet of magnet **770** may be proportionally smaller than those of flywheel apparatus **100,** and/or the winding power requirements may be reduced.

Figure 13 is a schematic cross-sectional view of a flywheel apparatus **1300** of the present invention having a third embodiment magnet **1370.** Flywheel apparatus **1300** is generally similar to any of the flywheel apparatus described above. Magnet **1370** includes magnet **170,** which is an electromagnet, and a permanent magnet **1301.** In this embodiment, magnet **1301** is an axially magnetized, axisymmetric ring magnet that is configured to be in series with the flux path of magnet **170.**

As in flywheel apparatus **1200,** rotor **920** of flywheel apparatus **1300** is lifted by the combination of and electromagnet and permanent magnet, and thus the windings of the electromagnet of magnet **1370** may be proportionally smaller than those of flywheel apparatus 100.

### FLIPPED-BEARING EMBODIMENTS

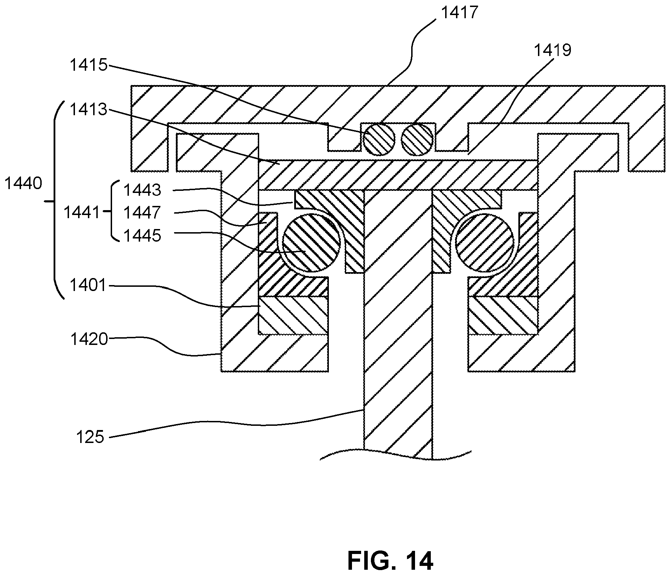

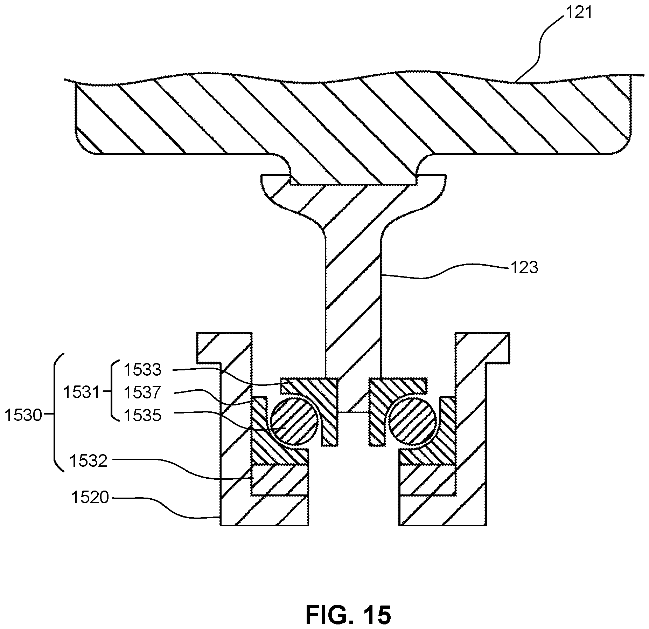

FIG. 14 is a schematic cross-sectional view of an embodiment of an upper bearing assembly **1440** according to the present invention, referred to as a flipped-bearing embodiment, and Figure 15 is a schematic cross-sectional view of a third embodiment of a lower bearing assembly **1540.** Bearing assemblies **1440** and **1540** are generally similar to the other bearing assemblies **130, 140, 240, 330, 640** and **730,** described herein, except as explicitly discussed sub sequently.

In this embodiment, rotor **120** does not travel axially during flywheel operation; magnet **170** is used to regulate the amount of force rotor **120** exerts against upper bearing assembly **1440** rather than the axial motion of the rotor along a shaft. Further, upper bearing assembly **1440** supports a downward net force, rather than an upward net lifting force. The downward net force is the difference between the rotor gravitational load (i.e., the rotor weight) and the upward lifting magnetic force applied by magnet **170.** In this embodiment, the preferred operation has the rotor gravitational load slightly exceeding the upward magnetic lifting force.

In the embodiment shown in FIG. 14, upper bearing assembly **1440** supports upper shaft **125** which in turn connects to rotor body **121.** Upper bearing assembly **1440** includes an upper bearing **1441,** a bearing locking cap **1413,** and a force sensor **1401.** Bearing **1441** includes a bearing inner portion **1443,** ball bearings **1445,** and a bearing outer portion .**1447.** The inner portion of bearing **1441** is connected via upper shaft **125** to rotor body **121.** Bearing inner portion **1443** may, for example, be press-fit to upper shaft **125.** Bearing outer portion **1447** connects to an upper bearing housing **1420** which in turn connects rigidly to housing body **111.**

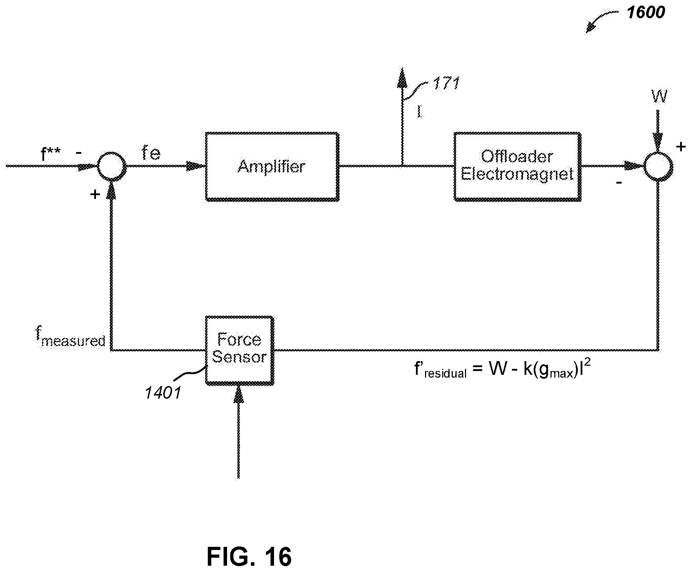

In contrast to upper bearing assemblies **240** and **640,** neither an axial spring nor a stop is required; rather bearing housing **1420** acts as a stop. Force sensor **1401** is mounted between a lower portion of bearing housing **1420** and the bottom of bearing outer portion **1447.** Force sensor **1401** enables use of a closed-loop force control approach described hereinbelow with reference to FIG. 16.

Bearing locking cap **1413** fits and holds upper bearing **1441** onto shaft **125.** It may be appreciated that shaft **125** may be a stub shaft.

Upper bearing housing **1420** acts as a lower stop to limit downward axial motion by bearing **1441.** In certain embodiments, upper bearing housing **1420** is part of housing body **111;** in other embodiments, bearing housing **1420** is a separate part that connects rigidly to housing body **111.** In flipped bearing embodiments, upper bearing housing **1420** supports upper bearing assembly **1440** from below.

Upper bearing outer portion **1447** uses a slip fit so that the load on upper bearing **1441** is supported through force sensor **1401** to permit accurate measurement of the upper bearing load.

As previously discussed, rotor **120** doesn't move axially during normal operation; neither does it move axially during start-up or shut-down. To protect against an unusual upward vertical displacement, a backup thrust bearing **1415** may be included. Such an unusual upward vertical displacement may occur, for example, due to an accident during transportation or as a result of a seismic event. Backup thrust bearing **1415** is additionally useful in the case that angular contact bearings are used for bearing **1441,** as explained in further detail below.

Backup thrust bearing **1415** is situated between bearing locking cap **1413** and a cap **1417,** which locks to housing body **111.** In normal operation there is a gap **1419,** of distance β (beta), between the top of bearing locking cap **1413** and the bottom of backup thrust bearing **1415.** This distance, β (beta), is then the total axial distance that upper bearing **1441** can travel without engaging backup thrust bearing **1415.** If this distance is exceeded in the vertical direction then bearing locking cap **1413** will engage with backup thrust bearing **1415.** Backup thrust bearing **1415** is referred to as a backup bearing since in normal operation it does not spin, i.e. it is not in contact with bearing locking cap **1413.** Backup thrust bearing **1415** is configured to absorb or diffuse upwards vertical thrust from shaft **125** that might otherwise result in damage or containment issues by accommodating upwards thrust without frictionally restraining rotation. While during transportation the rotor is not rotating, if a seismic event or other event occurs during operation of the flywheel then rotor **120** will most likely be spinning. In this case, a backup bearing rather than simply a bushing material is advantageous to absorb or diffuse the large rotational energy of the rotor.

It may be appreciated that while backup thrust bearing **1415** is illustrated to indicate the use of ball bearings, other types of bearings, including *inter alia,* a lubricated plate may be used. It may further be appreciated that in certain embodiments there is no cap **1417,** in which case flywheel housing **110** provides the top of bearing assembly **1440.**

In contrast to upper bearing assemblies **240** and **640,** upper bearing assembly **1440** doesn't require either an axial spring or a stop; rather bearing housing **1420** acts as a stop. Force sensor **1401** mounts between a lower portion of bearing housing **1420** and the bottom of bearing outer portion **1447.** This enables use of the closed-loop force control approach described with reference to FIG. 16, described hereinbelow.

In the embodiment shown in FIG. 15, a lower bearing assembly **1530** supports lower shaft **123** which in turn connects to rotor body **121.** As illustrated, lower shaft **123** may be a stub shaft which connects to a journal of rotor body **121.** However, in other embodiments lower shaft **123** may take different forms and the connection between lower shaft **123** and rotor body **121** may take different forms without departing from the scopethe subject invention.

Lower bearing assembly **1530** includes lower bearing **1531,** and a spring **1532.** Spring **1532** is disposed between lower bearing **1532** and a lower bearing housing **1520.** Bearings **1531** include a bearing inner portion **1533,** ball bearings **153,** and a bearing outer portion **1537.** Bearing inner portion **1533** connects via lower shaft **123** to rotor body **121.** Bearing outer portion **1537** connects to a bearing housing **1520.** Bearing inner portion **1533** may be, for example, press-fit to lower shaft **123.**

In certain embodiments, lower bearing housing **1520** is part of housing body **111;** in other embodiments, lower bearing housing **1520** is a separate part that connects rigidly to housing body **111.** In flipped bearing embodiments, lower bearing housing **1520** supports lower bearing assembly **1530** from below.

Lower bearing outer portion **1537** uses a slip fit to travel axially along lower bearing housing **1520** to accommodate differential length adjustment between the rotor together with lower shaft **123,** and housing **111** due to temperature swing and due to motion induced axial growth of the rotor. Spring **1532** is set to a prescribed bearing preload to allow for such travel.

A variety of embodiments may implement the flipped-bearing design. In certain embodiments, upper bearing **1441** as well as lower bearing **1531** employ angular contact ball bearings that provide high thrust capacity in one direction. Typically, angular contact ball bearings have raceways in the inner and outer rings that are displaced relative to each other in the direction of the bearing axis. This means that they are designed to accommodate simultaneous radial and axial loads. In such embodiments, upper bearing **1441** and the bottom bearing **1531** are mounted so as to provide high thrust capacity in the downward direction to support the rotor against downward gravitational force.

Flywheel embodiments that incorporate the flipped-bearing design offer a number of advantages relative to the previous bearing assemblies described with reference to FIGS. 2A-2B, 3, 6 and 7. The use of spring **1532** supporting the lower bearing allows for differential rotor and housing axial dimension growth to be accommodated at the lower bearing housing. As such, the dimension of the magnetic gap, g, is nearly invariant under differential dimensional changes between housing and rotor. Loading on upper bearing **1441** is set and controlled by magnetic offloading control system **160** while loading on lower bearing **1531** can be fully controlled by an axial preload spring. Thus, it is straightforward to ensure that the lower bearing will have excellent fatigue life under all operating conditions. As a result, any service to bearing assemblies **1440, 1530,** such as replacement or repair, will typically only involve upper bearing assembly **1440,** which can be accessed from the top without having to disconnect and remove flywheel rotor **120.** This can substantially reduce service and repair costs.

The flipped-bearing design also reduces the required offloader lifting force. For example, if, offloader magnet **170** had to apply rotor weight +1000 lb, to top bearing assembly **1440,** then, using the flipped-bearing design it applies rotor weight -1000 lb. This makes control of the electromagnet in offloader magnet **170** easier and potentially reduces its power consumption and size.

Furthermore, damage to the bearings due to unusual movements will be more likely to impact or damage the relatively cheaper, easier to replace backup bearing **1415** rather than the relatively more expensive main bearings, i.e. top bearing **1440** and bottom bearing **1540.**

FIG. 16 is a control system diagram illustrating an embodiment of a control algorithm **1600** of the present invention. Control algorithm **1600** is a version of control algorithm **800** that is adapted for use with the flipped-bearing embodiments described with reference to FIGS. 14-15. As such, it is identical to control algorithm **800** with the exception that the force sensing element 1401 has reversed polarity; thus the polarity of control algorithm 1600 is reversed from that of control algorithm **800.**

Control algorithm **1600** may be implemented as an analog or digital control system 160. In general, control algorithm **1600** accepts a measure of the force on upper bearing **1441** as sensed, for example, by a force sensor **1401,** which may be, for example, a strain gauge or other type of sensor or transducer, and provides a current **I** to lifting winding **171** to operate flywheel apparatus on curve portion **419** of FIG. 5.

Algorithm **1600** has a stored reference value, **f**,** that specifies the desired axial force on upper bearing **1441** and calculates a residual force, **f'_{residual},** which may be defined as **f'_{residual}** = **W** - k(gₘₐₓ) * I². In practice, the reference value may range between 30 lbs and 400 lbs, depending upon the bearing size, specification, and mode of operation. During normal operation, the reference value may be set near the minimum preload value to minimize raceway fatigue and drag. During certain transient conditions at start-up or during a seismic event, the reference value may temporarily be set to a higher value to keep positive loading force on the bearing. The residual force, **f'_{residual},** is sensed by force sensor **1401,** which produces an output signal **f_{measured}.** Algorithm **1600** subtracts **f**** from **f_{measured}** , to produce error signal **fₑ,** which is then amplified to produce the desired amount of current **I** to lifting winding **171.** Algorithm **1600** uses gₘₐₓ, the maximum gap value, defined with reference to FIG 4, as the distance from rotor body **121** to magnet **170.** Essentially, rotor **120** is maintained in this axial position during normal operation, supported from below by bearing housing **1420.** The magnetic gap, gₘₐₓ, provides clearance so that backup thrust bearing **1415** is not engaged during normal operation. Thus, while rotor **120** operates at a fixed axial position, as defined by gₘₐₓ, the design allows axial growth to be accommodated at the lower bearing assembly, i.e with spring **1532** allowing for axial expansion or contraction.

One embodiment of each of the methods described herein is in the form of a computer program that executes on a processing system, e.g., a one or more processors that are part of a control system. Thus, as will be appreciated by those skilled in the art, embodiments of the present invention may be embodied as a method, an apparatus such as a special purpose apparatus, an apparatus such as a data processing system, or a carrier medium, e.g., a computer program product. The carrier medium carries one or more computer readable code segments for controlling a processing system to implement a method. Accordingly, aspects of the present invention may take the form of a method, an entirely hardware embodiment, an entirely software embodiment or an embodiment combining software and hardware aspects. Furthermore, the present invention may take the form of carrier medium (e.g., a computer program product on a computer-readable storage medium) carrying computer-readable program code segments embodied in the medium. Any suitable computer readable medium may be used including a magnetic storage device such as a diskette or a hard disk, or an optical storage device such as a CD-ROM.

It will be understood that the steps of methods discussed are performed in one embodiment by an appropriate processor (or processors) of a processing (i.e., computer) system executing instructions (code segments) stored in storage. It will also be understood that the invention is not limited to any particular implementation or programming technique and that the invention may be implemented using any appropriate techniques for implementing the functionality described herein. The invention is not limited to any particular programming language or operating system.

## Claims

1. A flywheel apparatus comprising:
a flywheel housing (110) comprising a flywheel housing body (111);
a rotor (120) having a rotor weight and a vertical axis of rotation aligned with gravity, wherein the rotor (120) stores energy while it rotates about the vertical axis of rotation, and wherein the rotor includes a magnetic material;
a magnet (170, 1201), connected to the flywheel housing (110), configured to apply an upward off-loading force along the vertical axis of rotation, which partially counters the force of gravity on the rotor resulting in a net downward force;
an upper bearing (1441) comprising an inner portion (1443), ball bearings (1445), and an outer portion (1447) wherein the inner portion (1443) attaches to an upper shaft (125) of the rotor (120) which permits rotation of the rotor about the axis of rotation; and
an upper bearing housing (1420),
wherein the outer portion (1447) connects to the upper bearing housing (1420) which in turn attaches to the housing body (111),
wherein the upper bearing (1441) is disposed above a force sensor (1401) mounted between a lower portion of upper bearing housing (1420) and a bottom of outer portion (1447),
wherein the upper bearing housing (1420) is rigidly connected to the housing body (111) with a lower portion disposed below the bearing outer portion, which acts as a stop to limit downward axial motion by the upper bearing (1441),
wherein the upper bearing housing comprises a locking cap (1413) disposed above the upper bearing (1441) and wherein the inner portion (1443) of the upper bearing (1441) contacts the locking cap (1413), and
wherein the bearing locking cap (1413) fits and holds the upper bearing (1441) onto the upper shaft (125).

2. The apparatus of Claim 1 further comprising: a control system (160) adapted to provide current to the magnet (170) in response to measurements by one or more sensors in order to maintain a desired amount of the net downward force countered on the upper bearing (241, 1441), wherein preferably the control system (160) is a closed loop control system.

3. The apparatus of Claim 2 wherein the one or more sensors is the force sensor (1401), disposed below the outer portion (1447) of the upper bearing (1440), the force sensor (1401) providing a measurement of axial force on the upper bearing (1441) to the control system, wherein preferably the force sensor (1401) is a strain gauge.

4. The apparatus of Claim 3 wherein the control system (160) compares the measurement of axial force to a reference value and adjusts the current to the magnet according to the difference, wherein preferably the reference value may range from approximately 30 lbs to approximately 400 lbs.

5. The apparatus of Claim 2 wherein at least one of the measurements is selected from the group consisting of the magnetic flux between the magnet and the rotor, a position of the rotor, and a force applied by the magnet on the rotor.

6. The apparatus of Claim 1 wherein the inner portion (243, 1443) of the upper bearing (241, 1441) is press-fit with the upper shaft (125).

7. The apparatus of Claim 1 wherein the upper bearing (1441) does not move axially during normal operation of the flywheel apparatus.

8. The apparatus of Claim 1 further comprising a backup thrust bearing (1415) disposed above said locking cap (1413) configured to absorb upward vertical thrust by the upper bearing (1441).

9. The apparatus of Claim 8 wherein there is a gap between the backup thrust bearing (1415) and the locking cap (1413).

10. The flywheel apparatus of Claim 1 wherein said upper bearing housing (1420) is a part of the flywheel housing.

11. The flywheel apparatus of Claim 1, further comprising:
a lower bearing housing (1520) rigidly connected to the flywheel housing (110), comprising a lower bearing (1531) that permits rotation of the rotor about the axis of rotation;
wherein the lower bearing (1532) has a slip fit with the lower bearing housing (1520) that enables axial travel of the lower bearing (1531) to account for axial dimension growth of the rotor.

12. The flywheel apparatus of Claim 11, further comprising:
a spring (1532) disposed below the lower bearing (1531) and above at least a portion of the lower bearing housing (1520), the spring (1532) configured to provide a prescribed preload force, allowing for axial dimension growth of the rotor.

13. The flywheel apparatus of Claim 1 wherein said upper bearing housing (1420) supports said upper bearing (1441) from below.

14. The flywheel apparatus of Claim 1 wherein a gap (g) between the magnet (170, 1201) and the rotor (120) is substantially invariant during normal operation, wherein preferably the magnet (170) includes a permanent magnet (1201).

## Patentansprüche

1. Eine Schwungradvorrichtung, umfassend:
ein Schwungradgehäuse (110), das einen Schwungradgehäusekörper (111) aufweist;
einen Rotor (120), der ein Rotorgewicht und eine vertikale Drehachse aufweist, die an der Schwerkraft ausgerichtet ist,
wobei der Rotor (120) Energie speichert, während er sich um die vertikale Drehachse dreht, und wobei der Rotor ein magnetisches Material enthält;
einen Magneten (170, 1201), der mit dem Schwungradgehäuse (110) verbunden und eingerichtet ist, um eine Aufwärtsentlastungskraft entlang der vertikalen Drehachse aufzubringen, die der Schwerkraft auf den Rotor teilweise entgegenwirkt, was zu einer Nettoabwärtskraft führt;
ein oberes Lager (1441), das einen inneren Teil (1443), Kugellager (1445) und einen äußeren Teil (1447) aufweist, wobei der innere Teil (1443) an einem oberen Schaft (125) des Rotors (120) befestigt ist, was eine Drehung des Rotors um die Drehachse ermöglicht; und
ein oberes Lagergehäuse (1420),
wobei der äußere Teil (1447) mit dem oberen Lagergehäuse (1420) verbunden ist, das wiederum an dem Gehäusekörper (111) befestigt ist,
wobei das obere Lager (1441) über einem Kraftsensor (1401) angeordnet ist, der zwischen einem unteren Teil des oberen Lagergehäuses (1420) und einem Unterteil des äußeren Teils (1447) angebracht ist,
wobei das obere Lagergehäuse (1420) starr mit dem Gehäusekörper (111) verbunden ist, wobei ein unterer Teil unterhalb des äußeren Lagerteils angeordnet ist, was als ein Anschlag zur Begrenzung einer axialen Abwärtsbewegung des oberen Lagers (1441) wirkt,
wobei das obere Lagergehäuse eine Sperrkappe (1413) aufweist, die oberhalb des oberen Lagers (1441) angeordnet ist, und wobei der innere Teil (1443) des oberen Lagers (41) die Sperrkappe (1413) berührt, und
wobei die Lagersperrkappe (1413) das obere Lager (1441) an den oberen Schaft (125) passt und an dem oberen Schaft (125) hält.

2. Die Vorrichtung gemäß Anspruch 1, weiter umfassend: ein Steuersystem (160), das eingerichtet ist, dem Magneten (170) in Reaktion auf Messungen mittels eines oder mehrerer Sensoren Strom bereitzustellen, um einen gewünschten Betrag der Nettoabwärtskraft aufrechtzuerhalten, der das obere Lager (241, 1441) entgegenwirkt, wobei das Steuersystem (160) vorzugsweise ein geschlossenes Regelsteuersystem ist.

3. Die Vorrichtung gemäß Anspruch 2, wobei der eine oder die mehreren Sensoren der Kraftsensor (1401) ist/sind, der unterhalb des äußeren Teils (1447) des oberen Lagers (1440) angeordnet ist, wobei der Kraftsensor (1401) eine Messung der Axialkraft auf das obere Lager (1441) an das Steuersystem bereitstellt, wobei vorzugsweise der Kraftsensor (1401) ein Dehnungsmessstreifen ist.

4. Die Vorrichtung gemäß Anspruch 3, wobei das Steuersystem (160) die Messung der Axialkraft mit einem Referenzwert vergleicht und den Strom zu dem Magneten gemäß der Differenz einstellt, wobei vorzugsweise der Referenzwert in einem Bereich von etwa 30 lbs bis etwa 400 lbs liegen kann.

5. Die Vorrichtung gemäß Anspruch 2, wobei mindestens eine der Messungen aus der Gruppe ausgewählt ist, die aus dem magnetischen Fluss zwischen dem Magneten und dem Rotor, einer Position des Rotors und einer mittels des Magneten auf den Rotor ausgeübten Kraft besteht.

6. Die Vorrichtung gemäß Anspruch 1, wobei der innere Teil (243, 1443) des oberen Lagers (241, 1441) mit dem oberen Schaft (125) pressgepasst ist.

7. Die Vorrichtung gemäß Anspruch 1, wobei sich das obere Lager (1441) während des normalen Betriebs der Schwungradvorrichtung nicht axial bewegt.

8. Die Vorrichtung gemäß Anspruch 1, weiter aufweisend ein Unterstützungsdrucklager (1415), das oberhalb der Sperrkappe (1413) angeordnet und eingerichtet ist, um nach oben gerichteten vertikalen Druck mittels des oberen Lagers (1441) aufzunehmen.

9. Die Vorrichtung gemäß Anspruch 8, wobei zwischen dem Unterstützungsdrucklager (1415) und der Sperrkappe (1413) ein Spalt vorhanden ist.

10. Die Schwungradvorrichtung gemäß Anspruch 1, wobei das obere Lagergehäuse (1420) ein Teil des Schwungradgehäuses ist.

11. Die Schwungradvorrichtung gemäß Anspruch 1, weiter umfassend:
ein unteres Lagergehäuse (1520), das starr mit dem Schwungradgehäuse (110) verbunden ist, aufweisend ein unteres Lager (1531), das eine Drehung des Rotors um die Drehachse ermöglicht;
wobei das untere Lager (1532) eine Gleitpassung mit dem unteren Lagergehäuse (1520) aufweist, die eine axiale Bewegung des unteren Lagers (1531) ermöglicht, um die Axialrichtungsexpansion des Rotors zu berücksichtigen.

12. Die Schwungradvorrichtung gemäß Anspruch 11, weiter umfassend:
eine Feder (1532), die unterhalb des unteren Lagers (1531) und oberhalb mindestens eines Teils des unteren Lagergehäuses (1520) angeordnet ist, wobei die Feder (1532) eingerichtet ist, um eine vorgegebene Vorspannkraft bereitzustellen, die eine Axialrichtungsexpansion des Rotors ermöglicht.

13. Die Schwungradvorrichtung gemäß Anspruch 1, wobei das obere Lagergehäuse (1420) das obere Lager (1441) von unten abstützt.

14. Die Schwungradvorrichtung gemäß Anspruch 1, wobei ein Spalt (g) zwischen dem Magneten (170, 1201) und dem Rotor (120) während des normalen Betriebs im Wesentlichen unveränderlich ist, wobei vorzugsweise der Magnet (170) einen Permanentmagneten (1201) enthält.

## Revendications

1. Appareil à volant d'inertie comprenant :
un logement de volant d'inertie (110) comprenant un corps de logement de volant d'inertie (111) ;
un rotor (120) ayant un poids de rotor et un axe de rotation vertical aligné avec la gravité, dans lequel le rotor (120) stocke de l'énergie pendant qu'il tourne autour de l'axe de rotation vertical, et dans lequel le rotor comprend un matériau magnétique ;
un aimant (170, 1201), connecté au logement de volant d'inertie (110), configuré pour appliquer une force de décharge vers le haut le long de l'axe vertical de rotation, qui contrebalance partiellement la force de gravité sur le rotor, ce qui entraîne une force nette vers le bas ;
un palier supérieur (1441) comprenant une partie intérieure (1443), des paliers à billes (1445) et une partie extérieure (1447), dans lequel la partie intérieure (1443) se fixe à un arbre supérieur (125) du rotor (120) qui permet la rotation du rotor autour de l'axe de rotation ; et
un logement de palier supérieur (1420),
dans lequel la partie extérieure (1447) se raccorde au logement de palier supérieur (1420) qui, à son tour, se fixe au corps de logement (111),
dans lequel le palier supérieur (1441) est disposé au-dessus d'un capteur de force (1401) monté entre une partie inférieure du logement de palier supérieur (1420) et un fond de la partie extérieure (1447),
dans lequel le logement de palier supérieur (1420) est relié de manière rigide au corps de logement (111) avec une partie inférieure disposée sous la partie extérieure du palier, qui agit comme une butée pour limiter le mouvement axial vers le bas par le palier supérieur (1441),
dans lequel le logement de palier supérieur comprend un capuchon de verrouillage (1413) disposé au-dessus du palier supérieur (1441) et dans lequel la partie intérieure (1443) du palier supérieur (1441) est en contact avec le capuchon de verrouillage (1413), et
dans lequel le capuchon de verrouillage de palier (1413) ajuste et maintient le palier supérieur (1441) sur l'arbre supérieur (125).

2. Appareil selon la revendication 1, comprenant en outre : un système de commande (160) adapté pour fournir du courant à l'aimant (170) en réponse à des mesures par un ou plusieurs capteurs afin de maintenir une quantité souhaitée de la force nette vers le bas contrebalancée sur le palier supérieur (241, 1441), dans lequel le système de commande (160) est de préférence un système de commande en boucle fermée.

3. Appareil selon la revendication 2, dans lequel ledit un ou lesdits plusieurs capteurs est/sont le capteur de force (1401), disposé sous la partie extérieure (1447) du palier supérieur (1440), le capteur de force (1401) fournissant au système de commande une mesure de force axiale exercée sur le palier supérieur (1441), dans lequel le capteur de force (1401) est de préférence une jauge de contrainte.

4. Appareil selon la revendication 3, dans lequel le système de commande (160) compare la mesure de force axiale à une valeur de référence et ajuste le courant vers l'aimant en fonction de la différence, dans lequel de préférence la valeur de référence peut être dans une plage allant d'environ 30 livres à environ 400 livres.

5. Appareil selon la revendication 2, dans lequel au moins une des mesures est choisie dans le groupe constitué par le flux magnétique entre l'aimant et le rotor, une position du rotor et une force appliquée par l'aimant sur le rotor.

6. Appareil selon la revendication 1, dans lequel la partie intérieure (243, 1443) du palier supérieur (241, 1441) est ajustée par pression sur l'arbre supérieur (125).

7. Appareil selon la revendication 1, dans lequel le palier supérieur (1441) ne se déplace pas axialement pendant le fonctionnement normal de l'appareil à volant d'inertie.

8. Appareil selon la revendication 1, comprenant en outre un palier de butée de secours (1415) disposé au-dessus dudit capuchon de verrouillage (1413) configuré pour absorber une poussée verticale vers le haut exercée par le palier supérieur (1441).

9. Appareil selon la revendication 8, dans lequel il existe un espace entre le palier de butée de secours (1415) et le capuchon de verrouillage (1413).

10. Appareil à volant d'inertie selon la revendication 1, dans lequel ledit logement de palier supérieur (1420) fait partie du logement de volant d'inertie.

11. Appareil à volant d'inertie selon la revendication 1, comprenant en outre :
un logement de palier inférieur (1520) relié de manière rigide au logement de volant d'inertie (110), comprenant un palier inférieur (1531) qui permet la rotation du rotor autour de l'axe de rotation ;
dans lequel le palier inférieur (1532) a un ajustement coulissant avec le logement de palier inférieur (1520) qui permet un déplacement axial du palier inférieur (1531) pour tenir compte de la croissance de dimension axiale du rotor.

12. Appareil à volant d'inertie selon la revendication 11, comprenant en outre :
un ressort (1532) disposé sous le palier inférieur (1531) et au-dessus d'au moins une partie du logement de palier inférieur (1520), le ressort (1532) étant configuré pour fournir une force de précharge prescrite, permettant la croissance de dimension axiale du rotor.

13. Appareil à volant d'inertie selon la revendication 1, dans lequel ledit logement de palier supérieur (1420) supporte ledit palier supérieur (1441) par le dessous.

14. Appareil à volant d'inertie selon la revendication 1, dans lequel un espace (g) entre l'aimant (170, 1201) et le rotor (120) est sensiblement invariant pendant le fonctionnement normal, dans lequel de préférence l'aimant (170) comprend un aimant permanent (1201).
